# EUROPEAN PATENT APPLICATION

(11) **EP 2 871 433 A1**
(43) Date of publication of application: **13.05.2015**
(21) Application number: 13275281.7
(22) Date of filing: 06.11.2013
(51) Int. Cl.: F28D 7/10, B64D 33/08, F02C 7/14, F02C 7/224, F28D 21/00

(54) **Heat exchangers and the production thereof**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Method and apparatus for producing a heat exchanger (4), the method comprising: producing a digital model (76) of the heat exchanger (4) by: producing digital model of a first conduit (10) having a first end portion (26) and an opposite second end portion (30), and an intermediate portion (34) between the first and second end portions (26, 30), the intermediate portion (34) comprising a plurality of capillary tubes (36); producing a digital model of a second conduit (12); and arranging the digital models of the first and second conduits (10, 12) such that the intermediate portion (34) is within the second conduit (12); and, using the digital model of the heat exchanger (4), controlling an Additive Manufacturing apparatus (44) to perform an Additive Manufacturing process to produce the first and second conduits (10, 12) as specified by the digital model (76), thereby producing the heat exchanger (4).

## Description

### FIELD OF THE INVENTION

The present invention relates to heat exchangers and the production thereof.

### BACKGROUND

Additive Manufacturing (AM) (also known as Additive Layer Manufacture (ALM), 3D printing, etc.) is a process that may be used to produce functional, complex objects, layer by layer, without moulds or dies. Typically, such processes include providing material (e.g. metal or plastic) in the form of a powder or a wire, and, using a powerful heat source such as a laser beam, electron beam or an electric, or plasma welding arc, melting an amount of that material and depositing the melted material (e.g. on a base plate of a work piece). Subsequent layers are then built up upon each preceding layer.

Example AM processes include, but are not limited to, Laser Blown Powder, Laser Powder Bed, and Wire and Arc technologies.

In a separate field, heat exchangers are used in many different types of systems for efficient heat transfer from one medium to another. An example use of a heat exchanger is a fuel cooled oil cooler onboard an aircraft in which gearbox lubricant oil flows through radiator coils and fuel flows past the coils cooling the lubricant oil.

### SUMMARY OF THE INVENTION

In a first aspect, the present invention provides a method of producing a heat exchanger, the method comprising: producing a digital model of the heat exchanger and, using the digital model of the heat exchanger, controlling an Additive Manufacturing apparatus to perform an Additive Manufacturing process to produce the heat exchanger. Producing the digital model of the heat exchanger comprises: producing digital model of a first conduit, the first conduit comprising a first end portion at a first end of the first conduit, a second end portion at a second end of the first conduit opposite the first end, and an intermediate portion between the first end portion and the second end portion, the intermediate portion comprising a plurality of capillary tubes connecting the first end portion to the second end portion; producing a digital model of a second conduit; and arranging the digital models of the first and second conduits such that the intermediate portion is at least partially within the second conduit, thereby producing the digital model of the heat exchanger.

The second conduit may be an elongate pipe.

The heat exchanger may be produced as a single item.

Each of the capillary tubes may follow a meandering path.

The intermediate portion may further comprise one or more further capillary tubes, each further capillary tube being arranged to connect together two capillary tubes in such a way that a fluid may flow between those two capillary tubes.

The sum of the internal cross sectional areas of the capillary tubes may be substantially equal to the internal cross sectional area of the first end portion and/or the internal cross sectional area of the second end portion.

The intermediate portion may further comprise one or more support struts, each support strut being arranged to fixedly connect a conduit wall of the second conduit to one or more of the capillary tubes.

The intermediate portion may be wholly located within the second conduit.

The first end portion may be at least partially located outside the second conduit. The first end portion may pass through a conduit wall of the second conduit.

The second end portion may be at least partially located outside the second conduit. The second end portion may pass through a conduit wall of the second conduit.

The method may further comprise, after production of the heat exchanger, causing a first fluid to flow through the first conduit in a first direction, and causing a second fluid to flow through the second conduit in a second direction. The first direction may be opposite to the second direction.

The method may further comprise, after production of the heat exchanger, along each capillary tube, running a respective electrical wire, and causing a fluid to flow through the second conduit.

The steps of producing the digital models of the first and second conduits may comprise providing specification of a volume, and designing the first and second conduits such that heat exchanger fits into the specified volume.

The method may further comprise providing an aircraft comprising a cavity having the dimensions of the specified volume, and installing the produced heat exchanger into the aircraft cavity.

In a further aspect, the present invention provides apparatus for producing a heat exchanger, the apparatus comprising: one or more processors for: producing a digital model of a first conduit, the first conduit comprising a first end portion at a first end of the first conduit, a second end portion at a second end of the first conduit opposite the first end, and an intermediate portion between the first end portion and the second end portion, the intermediate portion comprising a plurality of capillary tubes connecting the first end portion to the second end portion; producing a digital model of a second conduit; and arranging the digital models of the first and second conduits such the intermediate portion is at least partially within the second conduit, thereby producing a digital model of the heat exchanger; a controller configured to, using the digital model of the heat exchanger, control an Additive Manufacturing apparatus; and the Additive Manufacturing apparatus configured to perform an Additive Manufacturing process to produce the first and second conduits as specified by the digital model, thereby producing the heat exchanger.

In a further aspect, the present invention provides a heat exchanger, the heat exchanger being a single item produced by performing an Additive Manufacturing process, the heat exchanger comprising: a first conduit comprising a first end portion at a first end of the first conduit, a second end portion at a second end of the first conduit opposite the first end, and an intermediate portion between the first end portion and the second end portion, the intermediate portion comprising a plurality of capillary tubes connecting the first end portion to the second end portion; and a second conduit. The first and second conduits are arranged such that the intermediate portion is at least partially within the second conduit.

In a further aspect, the present invention provides an aircraft comprising a heat exchanger is accordance with the preceding aspect.

### BRIEF DESCRIPTION OF THE DRAWINGS

Figure 1 is a schematic illustration (not to scale) of an example aircraft;
Figure 2 is a schematic illustration (not to scale) of an embodiment of a heat exchanger;
Figure 3 is a schematic illustration (not to scale) showing example Additive Manufacturing apparatus; and
Figure 4 is a process flow chart showing certain steps in an embodiment of a process of producing the heat exchanger.

### DETAILED DESCRIPTION

The terminology "Additive Manufacturing" is used herein to refer to all additive processes that may be used to produce functional, complex objects, layer by layer, without moulds or dies e.g. by providing material (e.g. metal or plastic) typically in the form of a powder or a wire, and, using a powerful heat source such as a laser beam, electron beam or an electric, or plasma welding arc, melting an amount of that material and depositing the melted material (e.g. on a base plate/work piece), and subsequently building layers of material upon each preceding layer.

Additive Manufacture (AM) may also be known *inter alia* as 3D printing, Direct Digital Manufacturing (DDM), Digital Manufacturing (DM), Additive Layer Manufacturing (ALM), Rapid Manufacturing (RM), Laser Engineering Net Shaping (LENS), Direct Metal Deposition, Direct Manufacturing, Electron Beam Melting, Laser Melting, Freeform Fabrication, Laser Cladding, Direct Metal Laser Sintering.

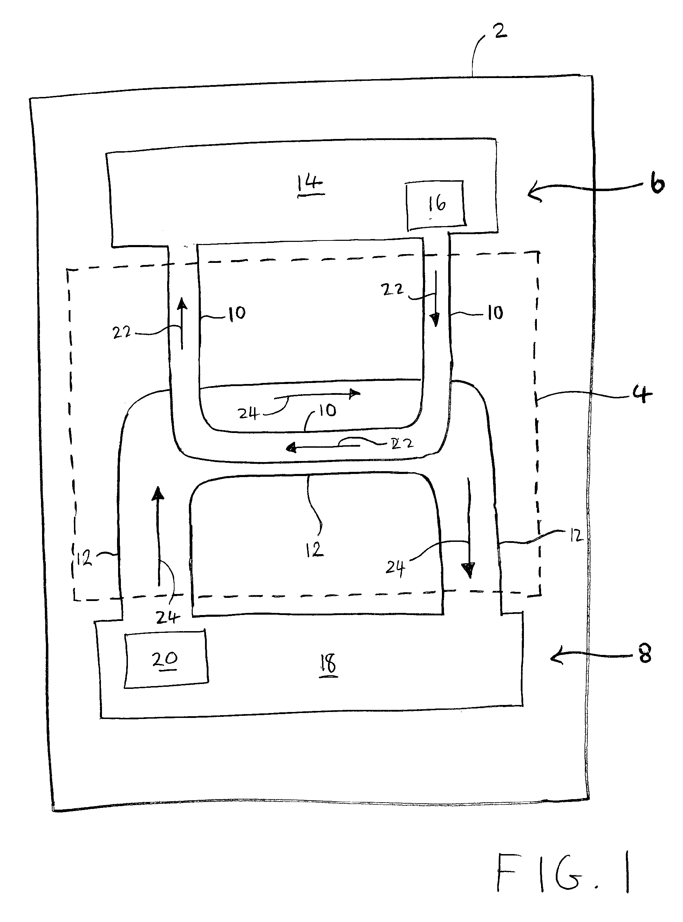

Figure 1 is a schematic illustration (not to scale) of an example aircraft 2 in which an embodiment of heat exchanger 4 is implemented.

In this embodiment, the aircraft 2 comprises a first system 6 and a second system 8. As described in more detail later below, the first system 6 and the second system 8 are coupled together via the heat exchanger 4.

In this embodiment, the heat exchanger 4 comprises a first conduit 10 and a second conduit 12.

In this embodiment, the first system 6 comprises a gearbox lubricant reservoir 14 and a lubricant oil pump 16.

In this embodiment, the second system 8 is fuel system comprising a fuel tank 18 and a fuel pump 20.

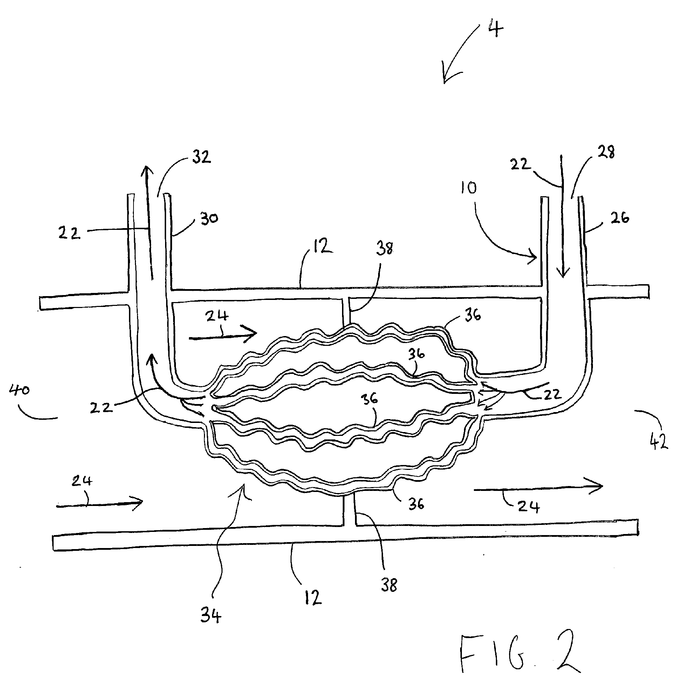

In this embodiment, the lubricant oil pump 16 is arranged to pump relatively hot lubricant oil from the gearbox lubricant reservoir 14 through the first conduit 10 of the heat exchanger 4. The path along which lubricant oil is pumped by the lubricant oil pump 16 through the first conduit 10 is indicated in the Figures by solid arrows and the reference numeral 22. The first conduit 10 is arranged to direct the pumped relatively hot lubricant oil away from the gearbox lubricant reservoir 14, through a portion of the second conduit 12, and back to the gearbox lubricant reservoir 14. As described in more detail later below with reference to Figure 2, as the lubricant oil is pumped through the first conduit 10 of the heat exchanger 4, heat is transferred from that lubricant oil thereby cooling the lubricant oil at least to some extent. Thus, the lubricant oil entering the gearbox lubricant reservoir 14 from the first conduit 10 tends to be cooler than the lubricant oil being pumped from the gearbox lubricant reservoir 14.

In this embodiment, the fuel pump 20 is arranged to pump relatively cool fuel from the fuel tank 18 through the second conduit 12 of the heat exchanger 4. The fuel that is pumped from the fuel tank 18 is cool (i.e. of lower temperature) relative to the lubricant oil being pumped from the gearbox lubricant reservoir 14 by the lubricant oil pump 16. The path along which fuel is pumped by the fuel pump 20 through the second conduit 12 is indicated in the Figures by solid arrows and the reference numeral 24. The second conduit 12 is arranged to direct the pumped relatively cool fuel away from the fuel tank 18, around a portion of the first conduit 10, and back to the fuel tank 18. As described in more detail later below with reference to Figure 2, as the fuel is pumped through the second conduit 12, heat is transferred from the relatively hot lubricant oil travelling through the first conduit 10 to the relatively cool fuel travelling through the second conduit 12, thereby heating the fuel at least to some extent and also cooling the lubricant oil at least to some extent. Thus, the fuel entering the fuel tank 18 from the second conduit 12 tends to be hotter than the fuel being pumped from the fuel tank 18.

Figure 2 is a schematic illustration (not to scale) showing a cross section of the heat exchanger 4.

In this embodiment, the heat exchanger 4 is made of aluminium alloy. However, in other embodiments the heat exchanger is made of one or more different materials instead of or in addition to aluminium alloy, for example, steel, a nickel-based alloy, titanium alloy, or copper.

In this embodiment, the heat exchanger 4 comprises the first conduit 10 and the second conduit 12.

In this embodiment, the first conduit 10 comprises a first end portion 26 at which is located a first opening 28, a second end portion 30 at which is located a second opening 32, and an intermediate portion 34 between the first end portion 26 and the second end portion 30. The first end portion 26 of the first conduit 10 passes through a conduit wall of the second conduit 12. The intermediate portion 34 of the first conduit 10 is wholly located within the conduit wall of the second conduit 12 and connects together the first end portion 26 and the second end portion 30. The second end portion 30 of the first conduit 10 passes through the conduit wall of the second conduit 12 at a location that is spaced apart from the location where the first end portion 26 passes through the conduit wall of the second conduit 12.

In this embodiment, the intermediate portion 34 comprises a plurality of relatively thin conduits, hereinafter referred to as "capillary tubes" and indicated in Figure 2 by the reference numeral 36. For ease of illustration, in Figure 2, the intermediate portion 34 is shown as including four capillary tubes 36. However, it will be appreciated by the skilled person that the intermediate portion 34 may include a different number of capillary tubes 36. For example, the intermediate portion 34 may include more than one hundred capillary tubes 36.

In this embodiment, each of the capillary tubes 36 have relatively small internal diameter compared to the internal diameter of the first or second end portions 26, 30. Preferably, the capillary tubes 36 are arranged such that the pressure of the fluid flowing the intermediate portion 34 (i.e. the pressure of the fluid flowing within each capillary tube 36) is substantially equal to the pressure of the fluid flowing through the first and second end portions 26, 30. In some embodiments, this may be achieved by providing that the sum of the internal cross sectional areas of the capillary tubes 36 is substantially equal to the internal cross sectional area of both the first and second end portions 26, 30. The terminology "internal cross sectional area" is used herein the refer to the cross sectional area of the channel through which a fluid flows, and may be calculated as: π x (1/2 x internal diameter of conduit)².

In this embodiment, each of the capillary tubes 36 follows a convoluted or meandering path, i.e. each of the capillary tubes 36 includes a plurality of bends or curves.

In some embodiments, the capillary tubes 36 are designed such that the surface area of the capillary tube wall that is in contact with the lubricant oil flowing through first conduit 10 is substantially maximised. Also, in some embodiments, the capillary tubes 36 are designed such that the surface area of the capillary tube wall that is in contact with the fuel flowing through second conduit 12 is substantially maximised. In some embodiments, one or more capillary tubes 36 may include surface vanes or other surface features to increase the surface area of that capillary tube 36. These surface features may be arranged in the same direction as the oil flow.

In some embodiments, one or more of the conduits comprises features to disrupt the laminar flow of fluid, thereby providing more effective thermal conductivity through fluid mixing.

In this embodiment, the intermediate portion 34 is fixedly attached to the internal surface of the conduit wall of the second conduit 12 by support struts 38. The support struts 38 connect the conduit wall of the second conduit 12 to one or more of the capillary tubes 36 so as to prevent or oppose movement (e.g., deflection) of the intermediate portion 34 within the second conduit 12. The support struts 38 advantageously tend to increase the strength of the heat exchanger 4 and tend to reduce the likelihood of the heat exchanger 4 being damaged. In some embodiments, the support struts 38 are designed to convey heat and improve the efficiency of the heat exchanger 4.

In this embodiment, the second conduit 12 is an elongate transport pipe (e.g. an elongate tube) for conveying fluid from one location to another location. The second conduit 12 comprises two openings (hereinafter referred to as the "third opening" and the "fourth opening" and indicated in the Figures by reference numerals 40 and 42 respectively) at opposite ends of the second conduit 12.

In operation, as indicated by arrows 22, lubricant oil travels through the first conduit 10 as follows. Firstly, the lubricant oil is pumped into the first end portion 26 through the first opening 28. The lubricant oil then passes through the first end portion 26, followed by the intermediate portion 34, followed by the second end portion 30. The lubricant oil then exits the first conduit 10 via the second opening 32. Simultaneously, as indicated by arrows 24, fuel travels through the second conduit 12 by entering the second conduit by the third opening 40, travelling through the second conduit 12 over the external surface of the intermediate portion 34, and exiting the second conduit 12 via the fourth opening 14.

As the lubricant oil travels through the capillary tubes 36 of the intermediate portion, heat from the lubricant oil is transferred through the walls of the capillary tubes 36 to the fuel that is passing over the external surface of the capillary tubes 36. This heat is then transferred away from the first conduit by the flowing fuel. Thus, heat is exchanged between the lubricant oil and the fuel and, in particular, the lubricant oil is cooled and the fuel is heated.

In this embodiment, the lubricant oil travels through the first conduit 10 in a direction that is opposite to the direction in which the fuel travels through the second conduit 12. This advantageously tends to facilitate heat transfer between the lubricant oil and the fuel. Nevertheless, in some embodiments, the lubricant oil travels through the first conduit 10 in the same direction as the fuel travelling through the second conduit 12.

The plurality of capillary tubes 36 advantageously tends to provide that the intermediate portion 34 has a relatively large surface area, e.g. compared to the first and second ends 26, 30. This advantageously tends to facilitate heat transfer from the lubricant oil passing through the first conduit 10 to the fuel passing through the second conduit 10. This effect tends to be increased by having a larger number of capillary tubes 36.

The small internal diameter plurality of the capillary tubes 36 tends to advantageously provide that the intermediate portion 34 has a relatively large surface area, e.g. compared to the first and second ends 26, 30. This advantageously tends to facilitate heat transfer from the lubricant oil passing through the first conduit 10 to the fuel passing through the second conduit 10. In some embodiments, the conduit walls of the capillary tubes 36 may be relatively thin, e.g., compared to the conduit walls of the first and second ends 26, 30, thereby increasing heat transfer between the lubricant oil passing through the first conduit 10 to the fuel passing through the second conduit 10.

The meandering paths of the capillary tubes 36 advantageously tends to provide that the intermediate portion 34 has a relatively large surface area, e.g. compared to the first and second ends 26, 30. This advantageously tends to facilitate heat transfer from the lubricant oil passing through the first conduit 10 to the fuel passing through the second conduit 10.

The above described heat exchanger 4 has a relatively complex shape. What will now be described is an example process of producing the heat exchanger 4.

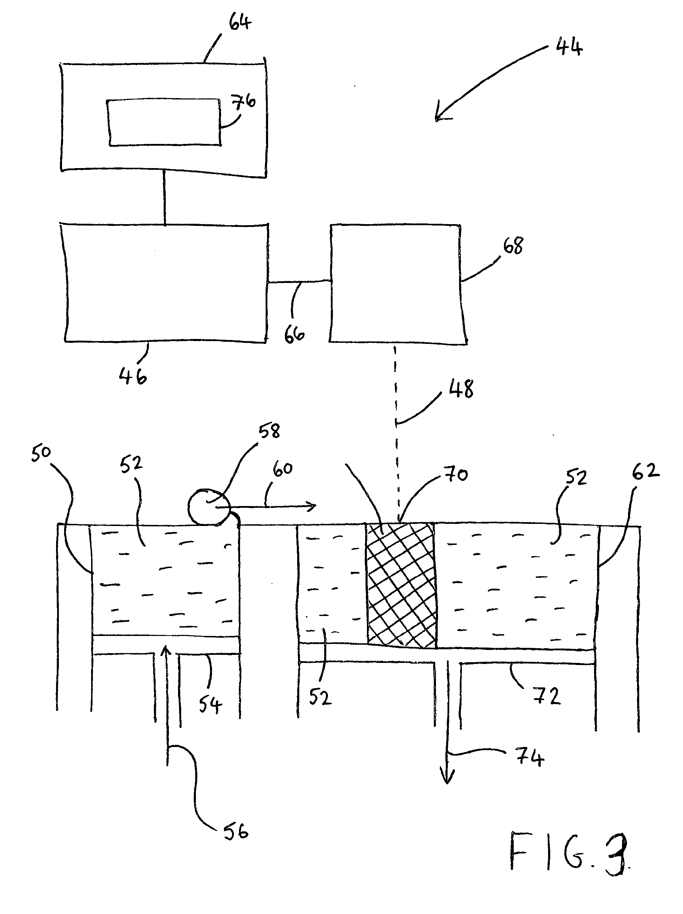

Figure 3 is a schematic illustration (not to scale) showing example Additive Manufacturing apparatus 44 that is used in an embodiment of a process of manufacturing the heat exchanger 4.

In this embodiment, the AM apparatus 44 is apparatus for performing a powder bed AM processes. However, in other embodiments, a different type of AM apparatus is used produce the heat exchanger 4, e.g. by performing a different type of AM process. Examples of AM processes that may be used in other embodiments include, but are not limited to, Material Extrusion processes, Material Jetting processes, Binder Jetting processes, Sheet lamination processes, Vat Photo-polymerisation processes, Powder bed fusion processes, and Directed Energy Deposition processes.

In this embodiment, the AM apparatus 44 comprises a heat source in the form of a laser source 46 configured to produce a high powered laser beam 48. The laser source 46 may be any appropriate type of laser source, e.g. a laser source that is configured to have a continuous wave power output of 500W.

The AM apparatus 44 further comprises a first powder repository 50 (or powder bed) containing an amount of metallic powder 52. The metallic powder 52 is an aluminium alloy powder. In other embodiments, a different type of material (e.g. a ceramic powder or a different type of metallic power such as a steel powder, a nickel-based alloy powder, a titanium alloy powder, or a copper powder) may be used.

In operation, a first piston 54 (that is located at the bottom of the first repository 50) is raised (in the direction indicated by an arrow in Figure 3 and the reference numeral 56) so as to raise an amount of the powder 52 above a top level of the first repository 50. A roller 58 is then rolled (in the direction indicated by an arrow in Figure 3 and the reference numeral 60) over the upper surface of the first repository 50 and across an upper surface of a second repository 62. This is performed so that the metallic powder 52 that was raised above the level of the first repository 50 by the raising of the first piston 54 is spread over an upper surface of the second repository 62. Thus, a top surface of the contents of the second repository 62 is covered by a layer of the metallic powder 52. In other embodiments, a different means of spreading the metallic powder 52 across a top surface of the contents of the second repository 62, such as a wiper, may be used instead of or in addition to the roller 58.

After a layer of the metallic powder 52 has been spread across a top surface of the contents of the second repository 62, the laser source 46 is controlled by a computer 64 to deliver the laser beam 48 via an optical fibre 66 to focussing optics 68. The focussing optics 68 focus the laser beam 48 to a focal point 70 on the layer of metallic power 22 that has been spread across a top surface of the contents of the second repository 62. The laser beam 48 melts a portion of the layer of metallic powder 52 onto which the laser beam 48 is focussed.

In this embodiment, the metallic powder 52 onto which the laser beam 48 is focussed is fully melted by the laser beam 48 and subsequently allowed to cool so as to form a layer of solid material. A second piston 72, located at the bottom of the second repository 62 is then lowered (i.e. moved in a direction indicated in Figure 3 by a solid arrow and the reference numeral 74) to allow for a further layer of metallic powder 52 to be spread by the roller 18 across the top surface of the contents of the second repository 62 (and subsequently melted and allowed to solidify).

Many layers of material are laid on top of one another (in accordance with a digital design model 76 for the heat exchanger 4 stored by the computer 64) to produce the heat exchanger 4.

In this embodiment, the laser source 46 and focussing optics 68 are moveable under the control of the computer 64 in an X-Y plane that is parallel to the top surface of the contents of the second repository 62. Thus, the laser focal point 70 may be directed to any point in a working envelope in the X-Y plane so that layers of material of a desired shape may be deposited.

Thus, AM apparatus 44 for performing a process of producing the intermediate pipe 4 is provided.

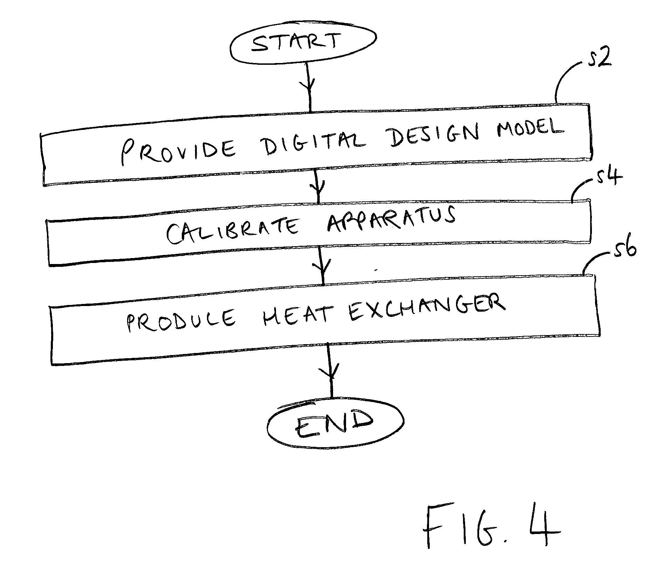

Figure 4 is a process flow chart showing certain steps of an embodiment of a process of producing the heat exchanger 4 using the above described example AM apparatus 44.

At step s2, the digital design model 76 for the heat exchanger 4 is specified and subsequently stored by the computer 64. In this embodiment, the digital model 76 can be viewed, manipulated and analysed using the computer 64 e.g. by implementing a suitable software package or tool.

At step s4, the AM apparatus 44 is calibrated. This calibration process may, for example, include, using the digital design model 76, determining a "tool path" that will be followed by the AM apparatus 44 when producing the heat exchanger 4.

At step s6, using the AM apparatus 44, an AM process is performed to form the heat exchanger 4. In this embodiment, the AM apparatus 44 performs a powder bed AM process which is described in more detail above with reference to Figure 3. However, in other embodiments, a different type of AM apparatus and/or process is used produce the heat exchanger 4.

In this embodiment, the AM process is performed in a substantially inert atmosphere (e.g. a chamber that is back-filled with an inert gas e.g. argon).

Thus, a process of producing the heat exchanger 4 is provided.

In this embodiment, the heat exchanger is produced as a single object or item, i.e. an item that contains only a single part. Thus, the above described heat exchanger may be installed, e.g. onto the aircraft, without a need to assemble the heat exchanger from multiple parts beforehand. Thus, installation and assembly time and costs tend to be reduced. Furthermore, because the heat exchanger is a single object, the heat exchanger includes no joints between component parts. Such joints may be locations of structural weakness in conventional heat exchanger systems or may be prone to leaks.

Advantageously, one or more of the conduits of the above described heat exchanger may be a transport pipe, i.e. a pipe for transporting fluids from one location to another. Thus, a transport pipe having an integral heat exchanger may be produced as a single object or item using the above described AM methods. Thus, having to install a separate heat exchanger system into a transport pipe may be avoided.

The above described heat exchanger is advantageously low cost and effective.

Advantageously, the above described heat exchanger is space efficient. For example, one or both of the conduits of the heat exchanger may be elongate transport pipes. Pipes in aircraft tend to be elongate. Having the capillary tubes disposed along the length of a pipe (i.e. the second conduit) provides a relatively large cross sectional for transferring heat without having a dedicated shorter, wider chamber in which heat exchange occurs.

Advantageously, the heat exchanger can be produced to be any appropriate shape. For example, the heat exchanger can be produced to fit available space e.g. onboard an aircraft, as opposed to having to make space to fit the heat exchanger.

For example, in some embodiments, a digital model of an aircraft may be provided. The digital model of the aircraft may specify a volume, or cavity, onboard the aircraft in which the heat exchanger is to fit. Advantageously, using the above described methods and apparatus, it tends to be possible to design a heat exchanger to fit within the prescribed space. This is, for example, because AM process tends to allow for objects having very complicated shapes to be produced. A heat exchanger may be designed to fit in the aircraft cavity, produced, and subsequently installing onboard the aircraft.

After being produced, the heat exchanger may be removed from the AM apparatus 44 and implemented onboard the aircraft 2 as described in more detail earlier above with reference to Figure 1.

Advantageously, the first and second conduits of the heat exchanger may be produced to have any desired shape and have any desired shaped cross section. For example, the conduits may be produced to have bends and curves as desired. In some embodiments, one or more conduits of the heat exchanger comprise a plurality of branches such that fluid flow may be split amongst a plurality of different conduits. In some embodiments, one or more conduits of the heat exchanger comprise one or more valves for controlling fluid flow through the conduit. AM process, such as those described above, tend to be particularly well suited to manufacturing complex structures such as embodiments of the pipe that have relatively complex shapes and/or include one or more valves. Powder bed fusion AM processes (such as the one described in more detail above with reference to Figures 1 and 2) tend to be particularly well suited to manufacturing complex structures such as embodiments of the pipe that have relatively complex shapes and/or include one or more valves.

Advantageously, by using an AM process to produce the heat exchanger, the heat exchanger is a single object or item. In other words, the heat exchanger is a single part component as opposed to a multipart component which may require further assembly. Thus, assembly time and costs tend to be reduced. Furthermore, this tends to provide that the mass of the heat exchanger is less than that of conventional heat exchangers, for example, because no bolts or other attachment means are used to attach together component parts. Thus, the size and weight of the heat exchanger tends to be less than that of conventional heat exchangers that provide equivalent heat transfer capabilities. Thus, the above described heat exchanger tends to be particularly beneficial when used on aircraft.

In the above embodiments, the heat exchanger is implemented onboard an aircraft. However, in other embodiments, the heat exchanger is used on or in conjunction with one or more different entities instead of or in addition to an aircraft. For example, in some embodiments, the heat exchanger is used onboard a different type of vehicle, such as a land-based or water-based vehicle.

In the above embodiments, the first conduit transports lubricant oil. Also, the second conduit transports fuel. However, in other embodiments, the first conduit transports a different type of fluid. Also, in other embodiments, the second conduit transports a different type of fluid. Thus, the heat exchanger may be used to couple different types of systems to those described above. Examples of other types of other embodiments of heat exchanger include, but are not limited to, an environmental cold air heat exchanger that cools aircraft fuel, a heat exchanger arranged to cool air inside the cockpit, and a heat exchanger arranged to cool engine lubricant.

In the above embodiments, the first conduit transports a fluid from one system, and returns it to the same system. Also, in the above embodiments, the second conduit transports a fluid from one system, and returns it to the same system. However, in other embodiments, the first conduit transports a fluid from one system to a different system. Also, in other embodiments, the second conduit transports a fluid from one system to a different system.

In the above embodiments, the first conduit transports a relatively hot fluid whilst the second conduit transports a relatively cool fluid. However, in other embodiments, the first conduit transports a relatively cool fluid whilst the second conduit transports a relatively hot fluid.

In the above embodiments, the conduits transport fluids. However, in other embodiments, one or more of the conduit may transport or house a different type of material. For example, in some embodiments, a conduit may house, or partially house, electrical wiring or an electronics unit (such as a computer CPU) that is to be cooled.

In some embodiments, a wall of one or more of the conduits is silvered or mirrored to reflect heat. For example, in some embodiment, an internal surface of the second conduit is silvered. Also, in some embodiments, an external surface of the intermediate portion of the first conduit is silvered. Such silvered surfaces may be deposited during the AM process. Alternatively, after the heat exchanger has been produced, a reflective coating may be applied to a surface, or a surface may be processed (e.g. mechanically abraded, chemically machined or acid etched) so as to make that surface more reflective.

In the above embodiments, the capillary tubes are separate tubes. However, in other embodiments, two or more capillary tubes are connected together, e.g., by further capillary tubes. Such an arrangement tends to increase the surface area of the intermediate portions, thereby increasing the efficiency of heat transfer.

## Claims

1. A method of producing a heat exchanger (4), the method comprising:
producing a digital model (76) of the heat exchanger (4), the step of producing the digital model (76) of the heat exchanger (4) comprising:
producing digital model of a first conduit (10), the first conduit (10) comprising:
a first end portion (26) at a first end of the first conduit (10);
a second end portion (30) at a second end of the first conduit (10) opposite the first end; and
an intermediate portion (34) between the first end portion (26) and the second end portion (30), the intermediate portion (34) comprising a plurality of capillary tubes (36) connecting the first end portion (26) to the second end portion (30);
producing a digital model of a second conduit (12); and
arranging the digital models of the first and second conduits (10, 12) such that the intermediate portion (34) is at least partially within the second conduit (12), thereby producing the digital model (76) of the heat exchanger (4); and
using the digital model of the heat exchanger (4), controlling an Additive Manufacturing apparatus (44) to perform an Additive Manufacturing process to produce the first and second conduits (10, 12) as specified by the digital model (76), thereby producing the heat exchanger (4).

2. A method according to claim 1 wherein the second conduit (12) is an elongate pipe.

3. A method according to any of claims 1 or 2, wherein the heat exchanger (4) is produced as a single item.

4. A method according to any of claims 1 to 3, wherein each of the capillary tubes (36) follows a meandering path.

5. A method according to any of claims 1 to 4, wherein the intermediate portion (34) further comprises one or more further capillary tubes, each further capillary tube being arranged to connect together two capillary tubes (36) in such a way that a fluid may flow between those two capillary tubes (36).

6. A method according any of claims 1 to 5, wherein the sum of the internal cross sectional areas of the capillary tubes (36) is substantially equal to the internal cross sectional area of the first end portion (26) and/or the internal cross sectional area of the second end portion (30).

7. A method according to any of claims 1 to 6, wherein the intermediate portion (34) further comprises one or more support struts (38), each support strut (38) being arranged to fixedly connect a conduit wall of the second conduit (12) to one or more of the capillary tubes (36).

8. A method according to any of claims 1 to 7, wherein
the intermediate portion (34) is wholly located within the second conduit (12);
the first end portion (26) is at least partially located outside the second conduit (12); and
the second end portion (30) is at least partially located outside the second conduit (12).

9. A method according to any of claims 1 to 8, the method further comprising, after production of the heat exchanger (4):
causing a first fluid to flow through the first conduit (10) in a first direction (22); and
causing a second fluid to flow through the second conduit (12) in a second direction (24); wherein
the first direction (22) is opposite to the second direction (24).

10. A method according to any of claims 1 to 8, the method further comprising, after production of the heat exchanger (4):
along each capillary tube (36), running a respective electrical wire; and
causing a fluid to flow through the second conduit (12).

11. A method according to any of claims 1 to 10, wherein the steps of producing the digital models of the first and second conduits (10, 12) comprise:
providing specification of a volume; and
designing the first and second conduits such that heat exchanger fits into the specified volume.

12. A method according to claim 11, the method further comprising providing an aircraft (2) comprising a cavity having the dimensions of the specified volume, and installing the produced heat exchanger (4) into the aircraft cavity.

13. Apparatus for producing a heat exchanger (4), the apparatus comprising:
one or more processors for:
producing a digital model of a first conduit (10), the first conduit (10) comprising:
a first end portion (26) at a first end of the first conduit (10);
a second end portion (30) at a second end of the first conduit (10) opposite the first end; and
an intermediate portion (34) between the first end portion (26) and the second end portion (30), the intermediate portion (34) comprising a plurality of capillary tubes (36) connecting the first end portion (26) to the second end portion (30);
producing a digital model of a second conduit (12); and
arranging the digital models of the first and second conduits (10, 12) such that the intermediate portion (34) is at least partially within the second conduit (12), thereby producing a digital model (76) of the heat exchanger (4); and
an Additive Manufacturing apparatus (44) configured to perform an Additive Manufacturing process to produce the first and second conduits (10, 12) as specified by the digital model (76), thereby producing the heat exchanger (4).

14. A heat exchanger (4), the heat exchanger (4) being a single item produced by performing an Additive Manufacturing process, the heat exchanger (4) comprising:
a first conduit (10) comprising:
a first end portion (26) at a first end of the first conduit (10);
a second end portion (30) at a second end of the first conduit (10) opposite the first end; and
an intermediate portion (34) between the first end portion (26) and the second end portion (30), the intermediate portion (34) comprising a plurality of capillary tubes (36) connecting the first end portion (26) to the second end portion (30); and
a second conduit (12); wherein
the first and second conduits (10, 12) are arranged such that the intermediate portion (34) is at least partially within the second conduit (12).

15. An aircraft (2) comprising a heat exchanger (4) in accordance with claim 14.
